(19) Europäisches Patentamt
European Patent Office
Office européen des brevets

(11) **EP 2 634 750 B1**

(12) **EUROPEAN PATENT SPECIFICATION**

(45) Date of publication and mention
of the grant of the patent:
**13.09.2017  Bulletin 2017/37**

(51) Int Cl.:
*G06T 7/00* *(2017.01)*     *H04N 17/00* *(2006.01)*

(21) Application number: **13156918.8**

(22) Date of filing: **27.02.2013**

(54) **A viewing device with object dimension measurement**

Betrachtungsvorrichtung mit Objektabmessungsmessung

Dispositif d'affichage avec mesure de dimension d'objet

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2012  IE 20120102**

(43) Date of publication of application:
**04.09.2013  Bulletin 2013/36**

(73) Proprietor: **Ash Technologies Limited
County Kildare (IE)**

(72) Inventors:
• **Johnston, Francis Alan
County Kildare (IE)**

• **Brennan, Fergal
County Dublin (IE)**
• **Maguire, Charles Hugh
County Kildare (IE)**

(74) Representative: **Weldon, Michael James et al
John A. O'Brien & Associates
Unit 4, The Courtyard Business Centre
Orchard Lane
Blackrock, County Dublin, A94 NV07 (IE)**

(56) References cited:
EP-A1- 1 707 918        WO-A1-2005/116924
US-A1- 2008 101 784     US-A1- 2011 018 987
US-A1- 2011 249 117

**Description**

Field of the Invention

The invention relates to a viewing device having a video camera and a display.

Prior Art Discussion

There have been many developments in image processing, and US6359644 describes a viewing device, in which there is calculation of object dimensions.

However, there is a need for an improved device for assisting with real world situations such as choice of miniature components for complex maintenance tasks.

US2011/0249117 (Yoshihama) describes an imaging device with a distance measuring capability.

US2008/0101784 (Hsu) describes a method for calculating distance and actual size of an object.

The invention is directed towards providing a viewing device which provides significant additional information for the user.

SUMMARY OF THE INVENTION

According to the invention, there is provided a viewing device as set out in claim 1.

Therefore, the device captures an object image and also measures its dimensions and generates this combined information in a display including the object image and the physical dimensions. This is particularly advantageous for many applications such as precision machining.

In one embodiment, the processor is adapted to display the cursor in the form of a grid line.

In another embodiment, the processor is adapted to generate the display with a pair of cursors contacting opposed sides of the object image. In one embodiment, the cursors include grid lines and said lines are displayed to contact an object image at extremities of the object image in two orthogonal dimensions.

Preferably, the processor is adapted to generate and hold in a static manner the image.

In one example, the processor is adapted to generate an image overlay of a cursor in the form of fixed pitch grid lines in either or both of two orthogonal directions, in which an interval between cursors is determined by including fractional divisions of pixel intervals which delay the grid overlay by a pixel for every $n$th grid line, where $n$ is the coefficient of the fractional power required.

DETAILED DESCRIPTION OF THE INVENTION

Brief Description of the Drawings

The invention will be more clearly understood from the following description of some examples thereof, given by way of example only with reference to the accompanying drawings in which:-

Fig. 1 is a block diagram of a viewing device of the invention;

Figs. 2 to 4 are front perspective, rear perspective, and front views of the device;

Fig. 5 is a flow diagram for operation of the device;

Figs. 6(a), (b), (c), and (d) are example displays showing subject dimension measurements generated by the device;

Figs. 7(a), (b), (c), and (d) are diagrams illustrating how accurate viewing is provided by the device;

Fig. 8 is a perspective view of an alternative device;

Fig. 9 is a flow diagram for image processing of this system; and

Fig. 10 shows hardware component interactions.

Description of the Embodiments

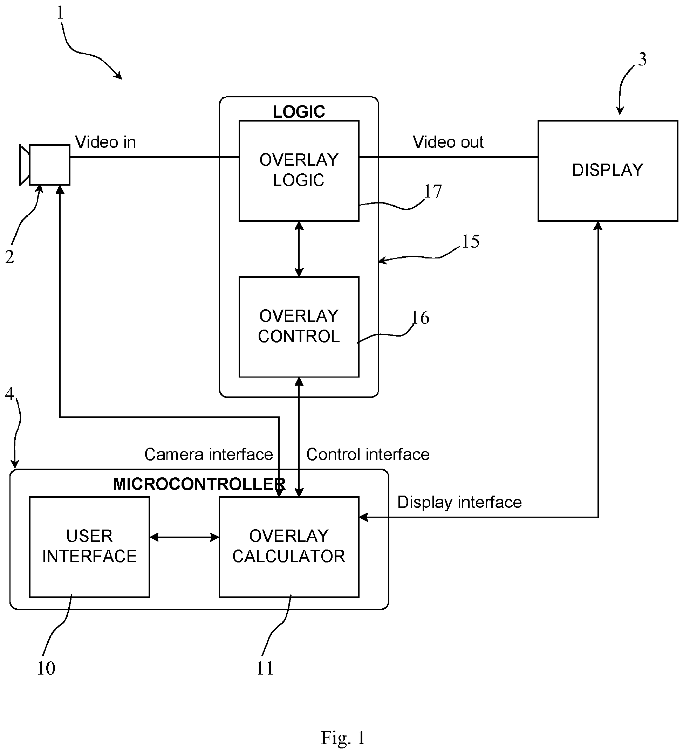

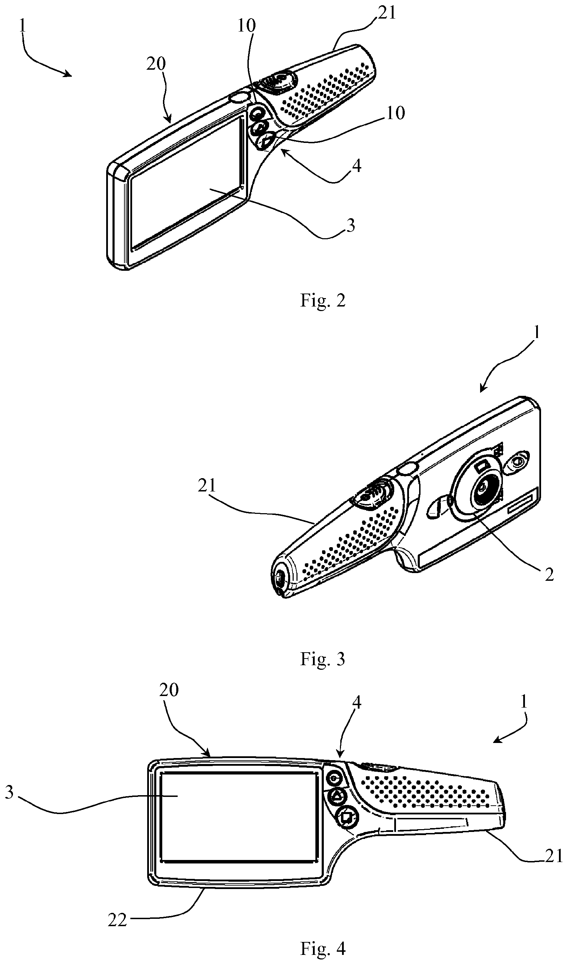

Referring to Figs. 1 to 4 a viewing device 1, which can be hand-held or bench-mounted has a camera 2, in this example of the CMOS type, and an LCD display 3. The camera technology may alternatively be of the CCD type. There is a user interface component 4 having UI buttons 10 on the device housing and an overlay calculator software function 11 on an 8-bit microcontroller. The microcontroller instructs an FPGA or CPLD device that includes logic functions 15, including an overlay control function 16 and overlay logic 17. The physical arrangement is shown in Figs. 2 to 4. The device 1 comprises a housing 20 with an integral handle 21 and a frame 22 for the display 3. This is particularly convenient for the user.

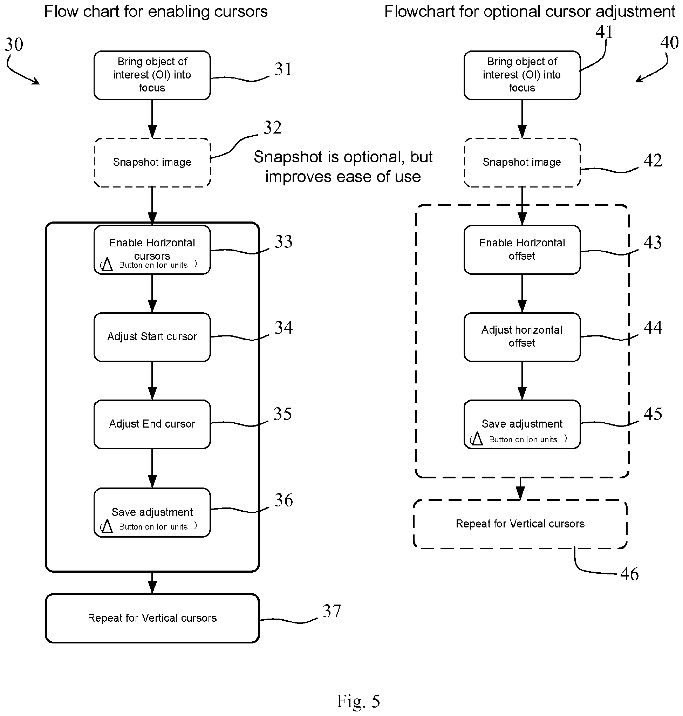

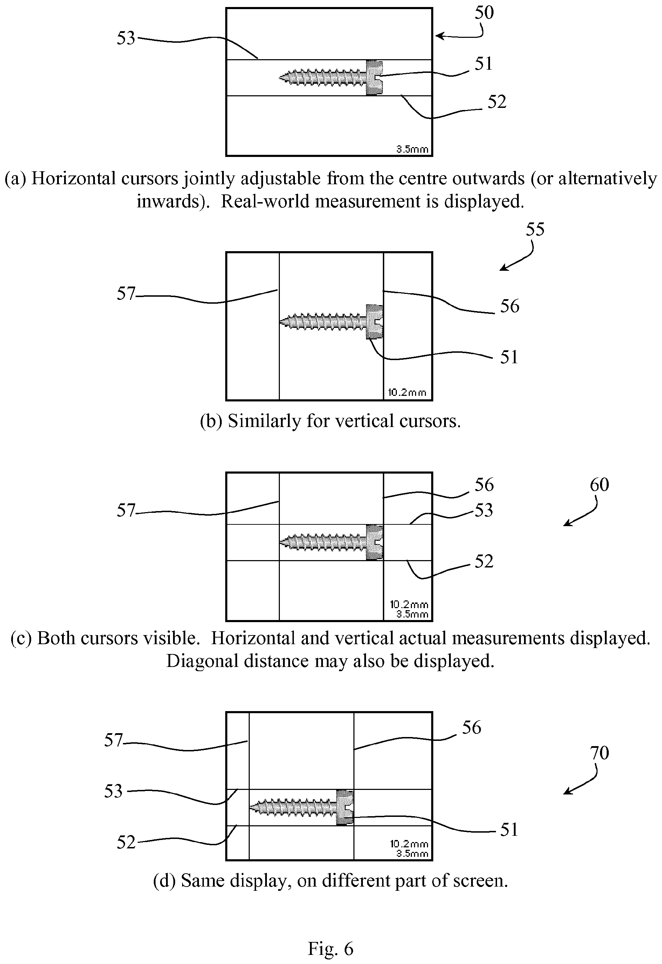

Referring to Figs. 5 and 6 in a method 30 the device 1 operates by bringing an object of interest into focus. It then correlates in each dimension pixels with physical distance. This correlation associates each of the horizontal and vertical dimensions with a grid line cursor. There is adjustment of the start and end cursors for each dimension.

In more detail, in a method 30 in step 31 the camera brings the object of interest (OI) into focus and in step 32 takes a snapshot image. In step 33 the pixels in the horizontal and vertical dimensions are converted to actual object dimensions. This is performed by the overlay logic 17 and uses the camera-object distance and the camera resolution to determine the actual object dimensions. In step 34 the overlay control function 16 generates overlay cursors 52 and 53 to illustrate the vertical object dimension and in step 35 moves them. The final adjustment is when those cursors contact the object at the vertical dimension extremities as shown in a display 50 in Fig. 6(a). As shown by the composite step 37 these operations are repeated for the horizontal dimension, resulting in a display 55 with cursors 56 and 57 as shown in Fig. 6(b). The overlay control function 16 may then display both pairs of cursors to generate a display 60 as shown in Fig. 6(c).

To perform the method 30 the object of interest is positioned in view of the camera 2 such that it is in focus on the plane where the measurement is required. Grids of arbitrary dimensions can be generated by the circuit 15 if required. Such grids can be used for visual (go/no-go) comparison of similar objects where exact dimensions are not necessary. The image can be frozen if required.

If the camera is capable of zooming or scaling, the display can be adjusted accordingly. The circuit 15 achieves this by using lookup tables or by dynamic computation.

The user may select cursor adjustment, causing one or both of the cursors to adjust position to suit the location on the screen of the object of interest to provide an offset display 70 shown in Fig. 6(d). Fig. 5 also illustrates a method 40 to provide the display 70. The method 40 has steps 41 and 42 equivalent to the steps 31 and 32. However there is a step 43 to enable horizontal offset, then adjustment of the horizontal offset (44), and serving of the adjustment (45). These steps are repeated for vertical cursors in step 46.

The device 1 therefore provides a method to aid in the measurement or dimensioning of an object viewed through a closed circuit video magnifier, as it generates and overlays cursors such as grid lines on the display.

The device 1 is implemented in line with the video path and is user controlled at the interface 10. The processor can provide mm-based horizontal and vertical spacing grids, or can provide independent horizontal and vertical dimensioning cursors that can be moved and resized for use in forming comparisons between objects of interest.

As it is a closed system, any optical aberrations introduced by the camera 2 lens can be corrected in the control logic circuits 15. The focus points of the camera 2 are also predefined and accounted in all dimension calculations. The grids and cursors can be placed according to standard units, such as mm. Also, information regarding video size, magnification level and focus point is all known, and this data allows the grids and cursors work with both live and stored video data.

The logic circuits 15 determine the current zoom setting (if the zoom is variable) and the current focus distance to be determined (if the lens can be focussed). There may be a fixed focal length lens that has no adjustment for focus, though more complex cameras with variable zoom and focus can be accommodated if the properties of the image can be determined for various settings of zoom and focus.

Where additional macro lenses (again of known properties) are fitted to the camera, if the microcontroller is made aware that these lenses are fitted, the grids can be scaled accordingly.

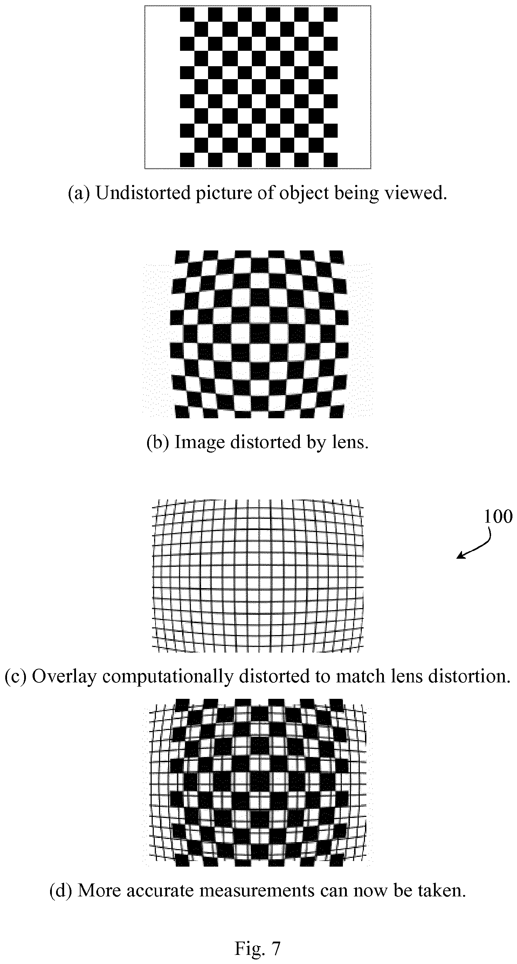

It is feasible to distort the overlay grid to match any lens aberration, thereby allowing more accurate measurements with inexpensive lenses. Fig. 7 illustrates how a grid, generated from a previously programmed lookup table within the microcontroller, will compensate for image distortion at a given zoom and focus level. Fig. 7(a) shows an un-distorted image, Fig. 7(b) a distorted image, Fig. 7(c) an overlay 100 computationally distorted to match lens distortion, and Fig. 7(d) super-imposition of the overlay.

Thus, any distortions in the lens system, if mapped at the time of manufacture of the system, can be used to either similarly distort the cursors or alternatively correct the distortion of the image caused by the lens (if processing power is available) to provide a more accurate measurement.

The algorithms are executed by embedded code and/or hardware descriptor language to which the user has no access. Therefore, the user cannot mistakenly place the device into a setup where incorrect measurement results are displayed.

This is useful in a production environment where an operator could mistakenly produce invalid measurements if the system required intervention or calibration first.

In an alternative example, a system allows the user to calibrate the system if this is deemed necessary. However, this calibration procedure would be granted only through the use of strict supervisor-only access control such as using a pass code (a long series of button presses in a particular order on the control keys) to enable only a supervisor to perform the calibration and preventing a general user from accessing it.

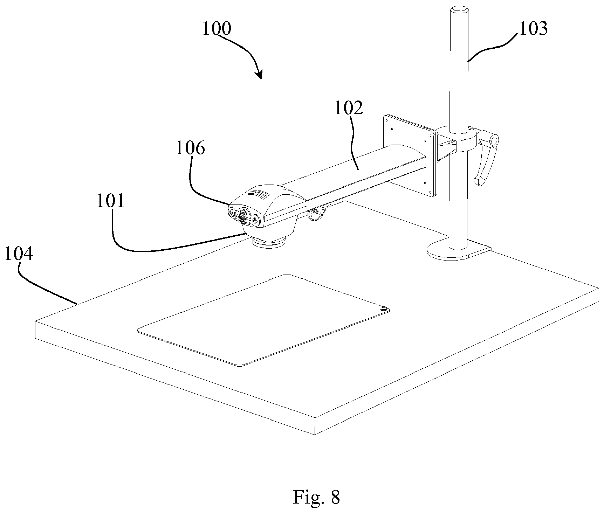

Fig. 8 shows an alternative device 100. It has a camera 101 mounted on an arm 102, in turn mounted on a post 103. The post 103 is mounted on a base 104 which supports the object being viewed at a known distance. The user interface and display are separate, not shown. The camera 101 has a motorised zoom lens and motorised focus lens that are moved by external command under the module's control. The camera 101 is housed (looking down) within the front part of the device 100. There are user interface buttons 106 on the front face of the device. The processing circuit is housed in the extruded body 102. The object of interest is placed directly under the camera 101 on the table 104. An external monitor (not shown) is provided for displaying the image delivered from the device. This monitor would typically be mounted either beside the device or on the same spigot as the camera.

The circuit can be queried to ascertain the positions of both zoom and focus lenses which are returned as a pair of dimensionless numbers. The numbers are used both in a lookup calibration table and in additional dynamic computation to determine the magnification currently employed and the distance to the object that is in focus. The result will return the scale of a pixel referred to real world measurements at the plane of focus.

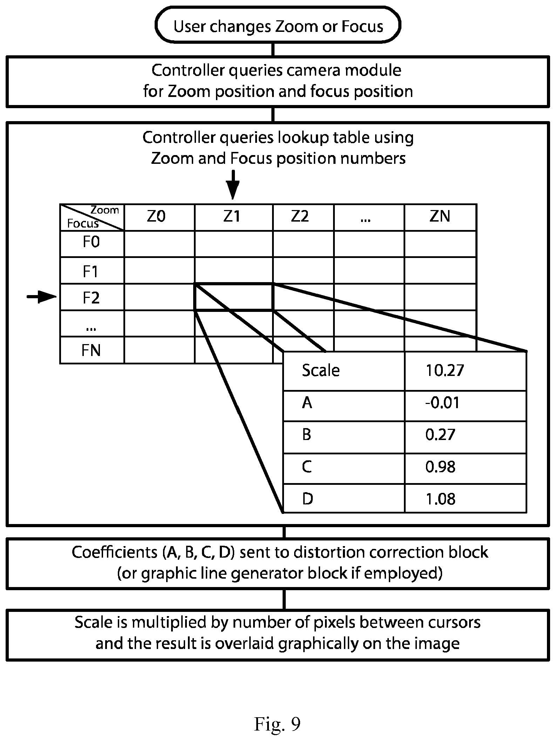

Referring to Fig. 9, the processor may use a lookup table to return lens distortion coefficients for the lens at any given zoom level and focus. The coefficients A, B, C, D are for the powers of a third order equation $R = Ar^3 + Br^2 + Cr + D$ (where r is the corrected distance of a pixel from the centre of the image) an algorithm that is well described in the public domain as a computational method of correcting pincushion and barrel distortion in a lens (the two most common lens distortions). The array of coefficients is computed at the product design stage for a range of zoom and focus settings for the particular camera module chosen for the design. The same coefficients would apply to all individual cameras of that model, and so can be programmed in at production.

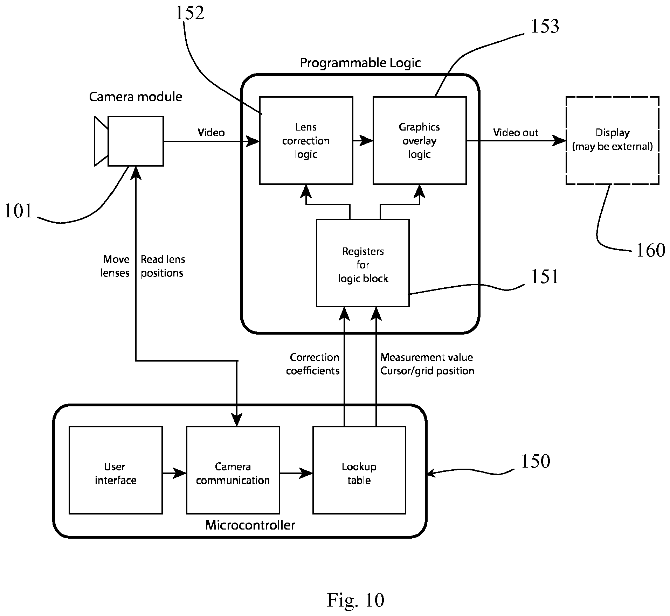

Fig. 10 shows flows between the following control circuit components linked with the camera 101 and a display 160:

- a microcontroller 150,
- logic block registers for 151,
- lens correction logic 152,
- graphics overlay logic 153.

If the processing power of the device is insufficient to perform real-time lens distortion correction, the lookup table can hold similar coefficients to define a grid that matches the distortion of the lens at any given position. This distorted grid can be more readily computed and overlaid on the image allowing for more accurate measurements to be made than if a regular rectilinear grid were used.

It will be appreciated that the cursors (with or without correction) are built into the hardware of the device and will be displayed either on the internal screen (in the case of the held-held arrangement) or on the external screen (in other examples) without requiring additional external hardware or software. Also, as the manufacturer of the product will characterise the lens and the current operating position of the lens is known within the device, the measurements will be inherently more accurate.

The main benefits and applications of the device 1 are for use as a quick go/no-go optical comparator for use in a production or inspection environment or for providing quick dimensioning of an object of interest.

Object Dimension Measurement in Various Cases

In this description "zoom lens position" can have two meanings depending on the type of lens and the method used to achieve magnification. In a simple device, magnification is achieved by decimating or binning camera pixels as there is an excess of camera pixels compared to the screen pixels (there is no change in the focal length of the lens). In a complex case, "zoom lens position" refers to the number returned from the servo attached to the motor that adjusts the focal length of the lens.

Simple case:

The simple case is where there is a fixed number of focus and zoom positions (as in the hand-held device described). A straightforward two-dimensional lookup table will suffice to return the scale of the image from pre-loaded calibration values:

$$\text{Pixels\_per\_mm} = \text{ScaleLookupTable[FocusPosition, DigitalMagLevel]}$$

The scale of a pixel referred to the real world at the plane of focus can be ascertained because the focus distance is preset to one of two distances and the device knows which is employed at any time. As there are only two focus positions and 3 digital magnification positions the table is very small and manageable.

Complex case:

The complex case allows for continuous focus and zoom positions where the number of positions of each motor servo would typically be in excess of 500 discrete values.

Using a lookup table as described above would require a scale table in excess of 500 kilobytes making it unviable for the simple microcontrollers generally employed in such equipment. However, the correlation between the zoom lens position and pixel-per-mm in the camera chosen for the product follows very closely to an exponential track:

$$\text{Pixels\_per\_mm} = Ae^{0.0001x}$$

where A is a coefficient dependent on the distance from the object to the camera,
x is the value of the zoom motor position in this particular camera,
the 0.0001 number is a coefficient of x , determined by experimentation and is again on the particular camera.

This coefficient 0.0001 is a constant and relates to the particular values returned by the camera. The formula returns a value that is accurate to greater than 99% across the range of zoom positions. This result is deemed acceptable for the application.

The distance from the object to the lens does not need to be determined directly. The circuit could use a lookup table to return a value for A for the position of the focus servo at the given zoom lens position. Because the chosen camera uses a varifocal lens type to achieve zoom and focus, this table would require a large, two-dimensional table as there is no simple correlation of focus and zoom servos to scale.

However, the focal distance can be readily determined with this type of lens when the zoom is moved to a maximum position. The algorithm can return a unique focus lens position that directly correlates to the object-camera distance in this circumstance.

The routine below can be used to determine the scale in pixels per millimetre of the camera's image:

Read and store the current zoom position. (ZoomPos)
Cause the zoom lens to zoom to its maximum zoom position.
Let the camera auto-focus.
Read the focus motor position (FocusPos)
Cause the zoom lens to return to previous zoom position and re-focus so the user has the same image as before.

The FocusPos value is used in a lookup table (using interpolation) to return A, the coefficient for the exponential function above. Hence the image scale in pixels per mm can be calculated to an acceptable degree of accuracy.

Gridline generation:

The gridlines may be generated by a programmable hardware device (Field Programmable Gate Array FPGA or an equivalent technology). The video image is passed to the FPGA as 24-bits of digital information which is validated with a pixel clock. A horizontal synchronisation pulse and a vertical synchronisation pulse are also provided to indicate the beginning of a new line and a new frame respectively.

The system's microcontroller can pass values to the FPGA for horizontal offset Ho, horizontal pitch Hp (both values are a count of pixels), vertical offset Vo and vertical pitch Vp (both values are a count of lines of video). The FPGA will count the number of horizontal pixels from the edge of active video until it reaches the horizontal offset number, as it counts, passing the incoming video information to its output unchanged. It then replaces the incoming video with a fixed number (representing the particular grid colour) for that particular pixel to the output. It continues to count the incoming pixels, and replaces every Hp pixels with a fixed colour. The operation continues in a similar manner counting lines, changing every Vp line with the grid colour. In this way the image can be overlaid with a grid of known horizontal and vertical pitch with known offsets.

In practice, using integer values for the horizontal and vertical pitch does not provide the resolution required to accurately display grid pitches where there is not a whole integer relationship between image pixels and pixels per mm. To overcome this, two additional values are passed from the microcontroller to the FPGA representing the fractional divisions of the pitch (Hf and Vf for horizontal and vertical counts respectively). The Hf and Vf numbers are 4-bit numbers and are interpreted by the FPGA as follows:

Bit-3, the most significant bit, if set, indicates that a gridline should be delayed by a pixel every second gridline.
Bit-2, if set, indicates that the gridline should be delayed by a pixel every fourth gridline,
Bit-1, if set, indicates that the gridline should be delayed by a pixel every eighth gridline.
Bit-0, if set, indicates that the gridline should be delayed by a pixel every sixteenth gridline.

The pitch of the grid or interval between cursors can be more accurately produced by including fractional divisions of pixel intervals which would delay the grid overlay by a pixel (or a line in the case of horizontal grid) for every *n*th gridline drawn, where n is the coefficient of the fractional power required. For example, a 4-bit fractional number could be employed where the number (in binary) is represented by ABCD or $(A \times 2^{-1}) + (B \times 2^{-2}) + (C \times 2^{-3}) + (D \times 2^{-4})$; if the coefficient A is set (1) every second gridline drawn would be delayed by one pixel; if D is set, every 16th gridline would be delayed by one pixel, and the delays are cumulative.

The above delays are cumulative. The 4-bit fractional numbers are sufficient to generate accurate gridline pitches for high definition video standards currently in use.

Embedding the image scale within a stored image using the system described.

The devices can store an image in internal memory and allow it to be read off by a computer for further analysis or record-keeping. It is a major benefit to have the scale of the image stored within the image file but common image formats do not have this facility within their header information. Rather than storing the image in a non-standard format, the first number of image data pixels can be sacrificed to store this scale.

Using the Windows™ bitmap format for image storage, the image pixel data is represented as 24-bit data (8 bits each for red, green and blue elements of each pixel). It is straightforward to replace the first and second image pixel data with chosen numbers as a signature (for instance 0x534441, 0x4C4544 which would appear as "SCALED" when the file was viewed in ASCII format) and the subsequent red and green elements of the next two image pixel data with the image scale, represented by a 32-bit, IEEE 754 format number where the blue elements of those pixel data are replaced by 0. The result of this is that four pixels in a corner of the image will appear out of context to the rest of the image but should not interfere with human interpretation of the image. Software on the computer can regenerate the scale from the embedded data and allow further analysis of the image on the computer.

Scale Embedding:

After the bitmap header, the first image data pixels would be replaced by the signature 0x534441, 0x4C4544. Given a scale of 6.29 pixels per millimetre, this would be represented in IEEE754 format as 0x40C947AE. This number would then be split across the red and green elements of the next two pixels thus: 0x40c900, 0x47AE00.
The appearance in the image would be that the lower left corner would have two mid-grey pixels and two lime green pixels but otherwise the image is undisturbed.

For example the stand arrangement of Fig. 8 may be modified t provide for support of a hand-held device, so that the user has the option of using the device in a hand-held manner or in a manner supported at a fixed position above an object-supporting surface.

**Claims**

1. A viewing device (1) comprising:

a housing (20);
a camera (2) having a zoom lens and a focus lens,
a display (3),
a user interface (4), and
a circuit (10, 11, 15) including a processor
the processor being adapted to:

generate a display (55) including an image (51) of an object of interest,
correlate (30) image pixels with object actual physical dimensions,
apply an overlay (52, 53, 56, 57) to the display to indicate said correlation, in which the overlay includes at least one cursor (52, 53, 56, 57) displayed to touch
the object image (51) and an indication of said physical dimensions, **characterized in that**,

camera characteristics used for said physical dimension calculation are stored in read-only format in said circuit (15);
wherein said characteristics include a plurality of camera zoom lens positions and a plurality of camera focus lens positions, and the processor is adapted to determine an object-camera distance from the focus lens position when fully zoomed-in on the object;
wherein the camera is capable of performing continuous zooming, and the processor is adapted to dynamically calculate a pixel-to-scene distance correlation according to an algorithm;
wherein said algorithm is:

pixels per distance unit = $Ae^{nx}$,
where:

A is a coefficient dependent on distance between the object and the camera and a zoom level employed, wherein the value of A is returned from a lookup table by interpolation for a current zoom lens position and the determined object-camera distance
x is a value representing zoom lens position, and
n is a constant coefficient value for the camera, determined at manufacture.

2. A viewing device as claimed in claim 1, wherein the processor in adapted to display the cursor in the form of a grid line (52, 53, 56, 57).

3. A viewing device as claimed in claim 2, wherein the processor is adapted to generate the display with a pair of cursors (52, 53) contacting opposed sides of the object image.

4. A viewing device as claimed in claims 2 or 3, wherein the cursors include grid lines (52, 53, 56, 57) and said lines are displayed to contact an object image at extremities of the object image in two orthogonal dimensions.

5. A viewing device as claimed in any preceding claim, wherein the processor (15) is adapted to generate and hold in a static manner the image.

6. A viewing device as claimed in any preceding claim, wherein the processor is adapted to generate an image overlay of a cursor in the form of fixed pitch grid lines in either or both of two orthogonal directions, in which an interval between cursors is determined by including fractional divisions of pixel intervals which delay the grid overlay by a pixel for every $n$th grid line, where $n$ is the coefficient of the fractional power required.

**Patentansprüche**

1. Bildbetrachtungsgerät (1), das Folgendes umfasst:

ein Gehäuse (20);
eine Kamera (2) mit einer Zoomlinse und einer Fokuslinse,
ein Display (3),
eine Benutzeroberfläche (4) und
eine Schaltung (10, 11, 15) mit einem Prozessor, wobei der Prozessor ausgelegt ist zum:

Erzeugen einer Anzeige (55) einschließlich eines Bildes (51) eines Objekts von Interesse,
Korrelieren (30) von Bildpixeln mit tatsächlichen physischen Abmessungen des Objekts,
Einblenden eines Overlay (52, 53, 56, 57) in das Display zum Anzeigen der genannten Korrelation, wobei das Overlay wenigstens einen Cursor (52, 53, 56, 57), der zum Berühren des Objektbildes (51) angezeigt wird, und eine Anzeige der genannten physischen Abmessungen beinhaltet,
**dadurch gekennzeichnet, dass**

für die Berechnung der genannten physischen Abmessungen benutzte Kameracharakteristiken im Nur-Lese-Format in der genannten Schaltung (15) gespeichert sind;

wobei die genannten Charakteristiken mehrere Kamerazoomlinsenpositionen und mehrere Kamerafokuslinsenpositionen beinhalten und der Prozessor zum Bestimmen einer Objekt-Kamera-Entfernung von der Fokuslinsenposition ausgelegt ist, wenn sie voll auf das Objekt eingezoomt ist;

wobei die Kamera kontinuierliches Zooming ausführen kann und der Prozessor zum dynamischen Berechnen einer Pixel-zu-Szene-Entfernungskorrelation gemäß einem Algorithmus ausgelegt ist;

wobei der genannte Algorithmus wie folgt ist:

Pixel pro Entfernungseinheit = $Ae^{nx}$,

wobei: A ein Koeffizient in Abhängigkeit von der Entfernung zwischen dem Objekt und der Kamera und einem angewendeten Zoom-Level ist, wobei der Wert von A von einer Lookup-Tabelle durch Interpolation für eine aktuelle Zoomlinsenposition und die vorbestimmte Objekt-Kamera-Entfernung zurückgegeben wird,

x ein die Zoomlinsenposition repräsentierender Wert ist, und

n ein bei der Herstellung festgelegter konstanter Koeffizientenwert für die Kamera ist.

2. Bildbetrachtungsgerät nach Anspruch 1, wobei der Prozessor zum Anzeigen des Cursors in Form einer Rasterlinie (52, 53, 56, 57) ausgelegt ist.

3. Bildbetrachtungsgerät nach Anspruch 2, wobei der Prozessor zum Erzeugen der Anzeige mit einem Paar Cursorn (52, 53) ausgelegt ist, die gegenüberliegende Seiten des Objektbildes kontaktieren.

4. Bildbetrachtungsgerät nach Anspruch 2 oder 3, wobei die Cursor Gitterlinien (52, 53, 56, 57) aufweisen und die genannten Linien zum Kontaktieren eines Objektbildes an Enden des Objektbildes in zwei orthogonalen Richtungen angezeigt werden.

5. Bildbetrachtungsgerät nach einem vorherigen Anspruch, wobei der Prozessor (15) zum Erzeugen und Halten des Bildes auf eine statische Weise ausgelegt ist.

6. Bildbetrachtungsgerät nach einem vorherigen Anspruch, wobei der Prozessor zum Erzeugen eines Bildoverlay eines Cursors in Form von Gitterlinien mit fester Teilung in einer oder in beiden von zwei orthogonalen Richtungen ausgelegt ist, wobei ein Intervall zwischen Cursorn durch Einschließen von fraktionalen Teilungen von Pixelintervallen bestimmt wird, die das Rasteroverlay durch ein Pixel für jede n-te Gitterlinie verzögern, wobei n der Koeffizient des benötigten Leistungsbruchteils ist.

## Revendications

1. Un dispositif de visualisation (1) comprenant :

un logement (20),
un appareil de prise de vues (2) possédant une lentille de zoom et une lentille de focalisation,
un dispositif d'affichage (3),
une interface utilisateur (4), et
un circuit (10, 11, 15) comprenant un processeur,
le processeur étant adapté de façon à :

générer un affichage (55) comprenant une image (51) d'un objet d'intérêt, corréler (30) des pixels d'image avec des dimensions physiques réelles de l'objet,
appliquer un calque (52, 53, 56, 57) à l'affichage de façon à indiquer ladite corrélation, le calque comprenant au moins un curseur (52, 53, 56, 57) affiché de façon à toucher l'image d'objet (51) et une indication desdites dimensions physiques,

caractérisé en ce que,
des caractéristiques d'appareil de prise de vues utilisées pour le calcul desdites dimensions physiques sont conservées en mémoire dans un format en lecture seule dans ledit circuit (15),
où lesdites caractéristiques comprennent une pluralité de positions de lentille de zoom d'appareil de prise de vues et une pluralité de positions de lentille de focalisation d'appareil de prise de vues, et le processeur est adapté de façon à déterminer une distance objet-appareil de prise de vues à partir de la position de lentille de focalisation lorsqu'il est en zoom avant complet sur l'objet, où l'appareil de prise de vues est capable d'exécuter un zoom continu, et le processeur est adapté de façon à calculer de manière dynamique une corrélation de distance pixel à scène selon un algorithme,
où ledit algorithme est :

pixels par unité de distance : $Ae^{nx}$,
où :

A est un coefficient qui dépend d'une distance entre l'objet et l'appareil de prise de vues et un niveau de zoom employé, où la valeur de A est renvoyée à partir d'une table de consultation par une interpolation pour une position de lentille de zoom actuelle et la distance objet-appareil de prise de vues déterminée,
x est une valeur représentant la position de lentille de zoom, et
n est une valeur de coefficient constante pour l'appareil de prise de vues déterminée en usine.

2. Un dispositif de visualisation selon la Revendication 1, où le processeur est adapté de façon à afficher le curseur sous la forme d'une ligne de quadrillage (52, 53, 56, 57).

3. Un dispositif de visualisation selon la Revendication 2, où le processeur est adapté de façon à générer l'affichage avec une paire de curseurs (52, 53) entrant en contact avec des côtés opposés de l'image d'objet.

4. Un dispositif de visualisation selon les Revendications 2 ou 3, où les curseurs comprennent des lignes de quadrillage (52, 53, 56, 57) et lesdites lignes sont affichées de façon à entrer en contact avec une image d'objet au niveau d'extrémités de l'image d'objet dans deux dimensions orthogonales.

5. Un dispositif de visualisation selon l'une quelconque des Revendications précédentes, où le processeur (15) est adapté de façon à générer et maintenir l'image de manière statique.

6. Un dispositif de visualisation selon l'une quelconque des Revendications précédentes, où le processeur est adapté de façon à générer un calque d'image d'un curseur sous forme de lignes de quadrillage à pas fixe dans l'une ou les deux directions de deux directions orthogonales, un intervalle entre les curseurs étant déterminé par l'inclusion de divisions fractionnaires d'intervalles de pixel qui décalent le calque de quadrillage d'un pixel toutes les nièmes lignes de quadrillage, où *n* est le coefficient de la puissance fractionnaire requise.

Fig. 1

Fig. 2

Fig. 3

Fig. 4

Flow chart for enabling cursors

Flowchart for optional cursor adjustment

*30*

Bring object of
interest (OI) into
focus — *31*

Snapshot image — *32*

Snapshot is optional, but
improves ease of use

Enable Horizontal
cursors
(△ Button on Ion units ) — *33*

Adjust Start cursor — *34*

Adjust End cursor — *35*

Save adjustment
(△ Button on Ion units ) — *36*

Repeat for Vertical cursors — *37*

*41*   *40*

Bring object of
interest (OI) into
focus

Snapshot image — *42*

Enable Horizontal
offset — *43*

Adjust horizontal
offset — *44*

Save adjustment
(△ Button on Ion units ) — *45*

Repeat for Vertical cursors

*46*

Fig. 5

(a) Horizontal cursors jointly adjustable from the centre outwards (or alternatively inwards). Real-world measurement is displayed.

(b) Similarly for vertical cursors.

(c) Both cursors visible. Horizontal and vertical actual measurements displayed. Diagonal distance may also be displayed.

(d) Same display, on different part of screen.

Fig. 6

(a) Undistorted picture of object being viewed.

(b) Image distorted by lens.

100

(c) Overlay computationally distorted to match lens distortion.

(d) More accurate measurements can now be taken.

Fig. 7

Fig. 8

User changes Zoom or Focus

Controller queries camera module
for Zoom position and focus position

Controller queries lookup table using
Zoom and Focus position numbers

| Focus\Zoom | Z0 | Z1 | Z2 | ... | ZN |
|---|---|---|---|---|---|
| F0 | | | | | |
| F1 | | | | | |
| F2 | | | | | |
| ... | | | | | |
| FN | | | | | |

| Scale | 10.27 |
|---|---|
| A | -0.01 |
| B | 0.27 |
| C | 0.98 |
| D | 1.08 |

Coefficients (A, B, C, D) sent to distortion correction block
(or graphic line generator block if employed)

Scale is multiplied by number of pixels between cursors
and the result is overlaid graphically on the image

Fig. 9

152

153

Camera module

101

Programmable Logic

Video

Lens correction logic

Graphics overlay logic

Video out

Display (may be external)

160

Move lenses | Read lens positions

Registers for logic block

151

Correction coefficients

Measurement value Cursor/grid position

User interface

Camera communication

Lookup table

150

Microcontroller

Fig. 10

**EP 2 634 750 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6359644 B
- US 20110249117 A, Yoshihama
- US 20080101784 A, Hsu